# EUROPÄISCHE PATENTANMELDUNG

(11) **EP 4 793 141 A1**
(43) Veröffentlichungstag der Anmeldung: **19.08.2026**
(21) Anmeldenummer: 25157411.7
(22) Anmeldetag: 12.02.2025
(51) Int. Cl.: B62D 21/16, B62D 21/17, B60K 13/06, B60K 15/063

(54) **KRAFTFAHRZEUG MIT LEITERRAHMEN**

(71) Anmelder: MAGNA STEYR Fahrzeugtechnik GmbH & Co KG, 8041 Graz (AT)
(72) Erfinder: HOFER, Bernhard, 8053 Graz (AT); RASTL, Philipp, 8510 Stainz (AT)
(74) Vertreter: Zangger, Bernd

(57) **Zusammenfassung**

Ein Kraftfahrzeug mit einem Leiterrahmen als Tragstruktur, wobei der Leiterrahmen zumindest einen Längsträger (1) umfasst, wobei der Längsträger (1) als Hohlquerschnitt (2) ausgebildet ist, wobei das Kraftfahrzeug einen Verbrennungsmotor als Antriebsmotor umfasst, wobei der durch den Hohlquerschnitt (2) ausgebildete Hohlraum des Längsträgers (1) selbst als Aufnahmeraum (3) für dem Antriebsmotor zuzuführende oder vom Antriebsmotor abzuführende Stoffe ausgebildet ist.

## Beschreibung

### Gebiet der Erfindung

Die vorliegende Erfindung betrifft ein Kraftfahrzeug mit einem Leiterrahmen als Tragstruktur.

### Stand der Technik

Vor allem für Nutzfahrzeuge und Geländefahrzeuge ist es bekannt, Leiterrahmen für die Fahrzeugstruktur eines Kraftfahrzeugs zu verwenden. Derartige Kraftfahrzeuge müssen bestimmte Steifigkeits- und Crashanforderungen erfüllen. An den Leiterrahmen als Tragstruktur des Kraftfahrzeugs werden Komponenten, wie Tank und Abgasanlage, von Fahrwerk und Antriebsstrang des Kraftfahrzeugs befestigt.

Die Vielzahl von Komponenten moderner Antriebsstränge führt zu Bauraumproblemen, da die Platzverhältnisse im Unterbodenbereich sehr limitiert sind und verschiedene Anforderungen, beispielsweise bezüglich Bauraum, Design, Sicherheitsanforderungen usw. gleichzeitig einzuhalten sind.

Die Vielzahl an benötigten Komponenten im Kraftfahrzeug führt somit insbesondere zu großen erforderlichen Bauräumen und hohen Kosten im Bereich des Unterbodens.

### Zusammenfassung der Erfindung

Es ist eine Aufgabe der Erfindung, ein Kraftfahrzeug mit einem Leiterrahmen als Tragstruktur in dieser Hinsicht zu verbessern und insbesondere ein Kraftfahrzeug mit einem Leiterrahmen anzugeben, das wenig Bauraum im Bereich des Unterbodens erfordert und dabei kostengünstig herstellbar ist.

Die Lösung der Aufgabe erfolgt durch ein Kraftfahrzeug mit einem Leiterrahmen als Tragstruktur, wobei der Leiterrahmen zumindest einen Längsträger umfasst, wobei der Längsträger als Hohlquerschnitt ausgebildet ist, wobei das Kraftfahrzeug einen Verbrennungsmotor als Antriebsmotor umfasst, wobei der durch den Hohlquerschnitt ausgebildete Hohlraum des Längsträgers selbst als Aufnahmeraum für dem Antriebsmotor zuzuführende oder vom Antriebsmotor abzuführende Stoffe ausgebildet ist.

Erfindungsgemäß verwendet somit ein Leiterrahmen zumindest einen, bevorzugt zwei, Längsträger, wobei der Längsträger des Leiterrahmens hohl ausgebildet ist. Der Hohlraum wird selbst als Aufnahmeraum für Stoffe genutzt, die dem Antriebsmotor zuzuführen oder von diesem abzuführen sind. Dem Antriebsmotor zuzuführenden Stoffe können hierbei beispielsweise Treibstoffe oder andere für den Betrieb erforderliche Stoffe sein, wie beispielsweise Harnstoff zur Abgasreinigung. Der Hohlraum dient somit als Raum zur Speicherung und/oder zum Transport der entsprechenden im Betrieb erforderlichen oder anfallenden Stoffe. Die Wand des Längsträgers selbst bildet die Begrenzung für den darin aufgenommenen Stoff. Hierdurch steht ein maximales Volumen für den Aufnahmeraum zur Verfügung. Die Wände des Längsträgers werden doppelt genutzt - sowohl um die Steifigkeits- und Crasheigenschaften eines Leiterrahmens des Kraftfahrzeugs zu erfüllen als auch um die entsprechenden Speicher- und/oder Transportaufgaben, insbesondere für Kraftstoffspeicher und/oder für Abgasanlagen zu erfüllen. Dadurch werden Bauraum, Kosten und Gewicht eingespart.

Weiterbildungen der Erfindung sind in den abhängigen Ansprüchen, der Beschreibung sowie den beigefügten Zeichnungen angegeben.

Vorzugsweise ist der Längsträger durch zwei Schalen ausgebildet, die zusammen den Hohlquerschnitt ausbilden, wobei die zwei Schalen dicht miteinander verschweißt sind. Die beiden Schalen bilden bevorzugt die Innenseite und die Außenseite des Längsträgers.

Bevorzugt ist zumindest eine Abschottung als dicht in den Hohlquerschnitt eingeschweißte Trennwand im Längsträger eingerichtet, um den Aufnahmeraum von einem weiteren Raum des Längsträgers zu trennen.

Besonders bevorzugt sind zwei derartige Abschottungen im Längsträger angeordnet, so dass der Aufnahmeraum für dem Antriebsmotor zuzuführende oder vom Antriebsmotor abzuführende Stoffe nach vorne und nach hinten in Längsrichtung des Kraftfahrzeugs abgeschlossen ist.

Der Hohlraum des Längsträgers selbst, also der Aufnahmeraum, ist gemäß einer Ausführungsform als Kraftstoffspeicher zur Speicherung eines Kraftstoffs für den Antriebsmotor ausgebildet.

Bevorzugt umfasst das Kraftfahrzeug einen Füllstutzen und/oder eine Betankungsentlüftungsleitung, wobei der Füllstutzen und/oder die Betankungsentlüftungsleitung in den Aufnahmeraum des Längsträgers mündet. Am anderen Ende ist der Füllstutzen und/oder die Betankungsentlüftungsleitung in den Außenraum des Kraftfahrzeugs geführt.

Bevorzugt umfasst das Kraftfahrzeug eine Tankentlüftungsleitung, wobei die Tankentlüftungsleitung in den Aufnahmeraum des Längsträgers mündet und am anderen Ende zu einem Aktivkohlefilter geführt ist.

Gemäß einer Ausführungsform der Erfindung ist der durch den Hohlquerschnitt ausgebildete Hohlraum des Längsträgers selbst, also der Aufnahmeraum, als Abgasführung zur Abführung von Abgasen des Antriebsmotors ausgebildet.

Vorzugsweise führt eine Abgaszuführungsleitung in den Aufnahmeraum und führt eine Abgasabführleitung aus dem Aufnahmeraum heraus, wobei bevorzugt die Abgaszuführungsleitung und/oder die Abgasabführleitung an der dem Inneren des Kraftfahrzeugs zugewandten Seite, also an der Innenseite des Längsträgers, in den Längsträger münden.

Bevorzugt umfasst der Leiterrahmen zwei derartige Längsträger, so dass der durch den Hohlquerschnitt ausgebildete Hohlraum des jeweiligen Längsträgers selbst als für dem Antriebsmotor zuzuführende oder vom Antriebsmotor abzuführende Stoffe ausgebildet ist. Vorzugsweise sind beide Längsträger als Kraftstoffspeicher oder beide Längsträger als Abgasführung ausgebildet oder ein Längsträger ist als Kraftstoffspeicher und der andere Längsträger als Abgasführung ausgebildet.

Bevorzugt ist zumindest ein Querträger an beiden Längsträgern befestigt, besonders bevorzugt verschraubt.

Der Querträger kann über Gummilager entkoppelt an beiden Längsträgern befestigt sein, bevorzugt über Gummilager entkoppelt verschraubt sein. Durch die Gummilager kann eine Entkoppelung zum restlichen Rahmen ermöglicht werden, insbesondere zur Geräuschminderung, beispielsweise bei einem Abgasschalldämpfer.

Vorzugsweise weist der Querträger einen Hohlraum auf, wobei der Hohlraum des Querträgers als Kraftstoffspeicher oder als Abgasführung oder als Batteriemodul oder als Schalldämpfermodul ausgebildet ist. Die Querstruktur des Leiterrahmens kann also auch als Energiespeicher für Batterien Verwendung finden, speziell für kleinere Hybrid- oder Plug in-Hybridfahrzeuge.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Darstellung der Längsträger eines Leiterrahmens eines erfindungsgemäßen Kraftfahrzeugs in einer ersten Ausführungsform.
- Fig. 2: ist eine Schnittansicht eines Längsträgers gemäß Fig. 1.
- Fig. 3: zeigt zwei Schritte bei der Herstellung eines Längsträgers gemäß Fig. 1.
- Fig. 4: ist eine schematische dreidimensionale Darstellung der Längsträger eines Leiterrahmens eines erfindungsgemäßen Kraftfahrzeugs in einer zweiten Ausführungsform.
- Fig. 5: ist eine schematische dreidimensionale Darstellung der Längsträger eines Leiterrahmens eines erfindungsgemäßen Kraftfahrzeugs in einer dritten Ausführungsform.

### Detaillierte Beschreibung der Erfindung

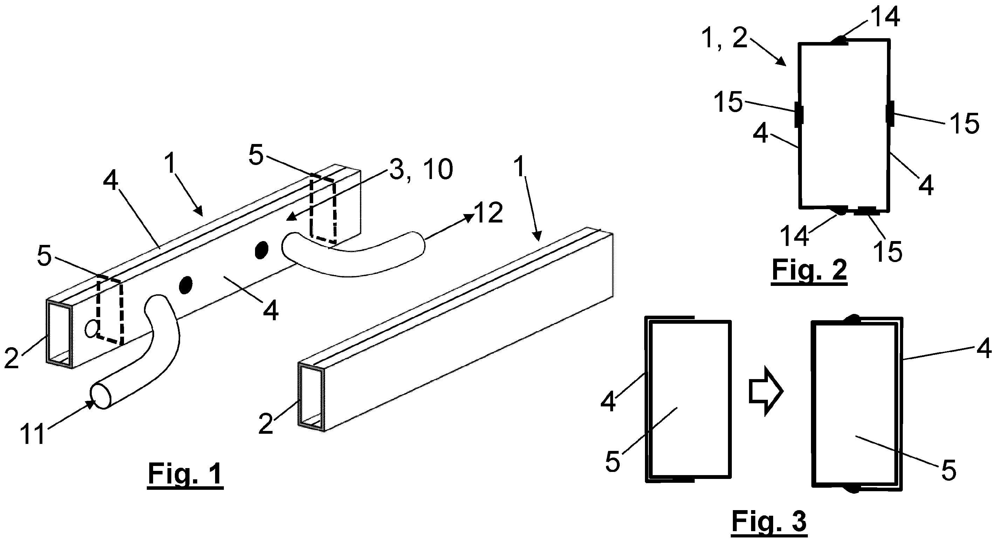

In der Fig. 1 sind zwei Längsträger 1, nämlich ein linker und ein rechter Längsträger 1 eines Leiterrahmens eines erfindungsgemäßen Kraftfahrzeugs schematisch dargestellt.

Wie im linken Längsträger 1 dargestellt, ist der Längsträger 1 als Hohlquerschnitt 2 ausgebildet. Der durch den Hohlquerschnitt 2 ausgebildete Hohlraum des Längsträgers 1 selbst ist als Aufnahmeraum 3 für dem Antriebsmotor zuzuführende oder vom Antriebsmotor abzuführende Stoffe ausgebildet.

Zwei Abschottungen 5 sind als dicht in den Hohlquerschnitt 2 eingeschweißte Trennwände im Längsträger 1 eingerichtet, um den tatsächlich genutzten Aufnahmeraum 3 im Längsträger 1 von weiteren Räumen des Längsträgers 1 zu trennen, nämlich von Längsabschnitten des Längsträgers 1 die sich außerhalb der beiden gasdichten Abschottungen 5 befinden, also vor der vorderen Abschottung 5 und hinter der hinteren Abschottung 5. Dabei beziehen sich die Begriffe "vorne" und "hinten" auf die Längsrichtung des Kraftfahrzeugs in üblicher Fahrtrichtung.

In der Ausführung der Fig. 1 ist der durch den Hohlquerschnitt 2 ausgebildete Hohlraum des Längsträgers 1, genauer der Aufnahmeraum 3 der von den beiden Abschottungen 5 begrenzt ist, als Abgasführung 10 zur Abführung von Abgasen eines Antriebsmotors ausgebildet. Durch eine geeignete Anordnung der Abschottungen 5 kann beispielsweise eine Geräuschoptimierung durch Ausbildung definierter Resonanzräume im Leiterrahmen erfolgen.

Eine Abgaszuführungsleitung 11 führt von vorne - nämlich vom Verbrennungsmotor her und bevorzugt von einer dem Verbrennungsmotor nachgeschalteten Abgasreinigung her - in den Aufnahmeraum 3. Eine Abgasabführleitung 12 führt aus dem Aufnahmeraum 3 nach hinten, um den Abgasstrom in Richtung nach hinten nach außen abzugeben. Die Abgaszuführungsleitung 11 und die Abgasabführleitung 12 sind an der dem Inneren des Kraftfahrzeugs zugewandten Seite, also der Innenseite des Längsträgers 1, mit dem Längsträger 1 verbunden, münden also in eine innen liegende Schale 4 des Längsträgers 1.

Wie in Fig. 1 zu sehen, kann der Leiterrahmen eines Kraftfahrzeugs zwei derartige Längsträger 1 umfassen. Die beiden Längsträger 1 können jeweils Aufnahmeräume 3 ausbilden, im Inneren ihrer Hohlquerschnitte 2. Beide Aufnahmeräume 3 können dann für dem Antriebsmotor zuzuführende oder vom Antriebsmotor abzuführende Stoffe genutzt werden. Die beiden Längsträger 1 können insbesondere gleichartig ausgebildet sein und beispielsweise spiegelbildlich angeordnet, so dass beispielsweise deren Innenseiten jeweils gleich ausgebildet sind.

Fig. 2 zeigt eine Schnittansicht eines Längsträgers 1 und somit den Hohlquerschnitt 2 eines Längsträgers 1 gemäß Fig. 1 und zeigt genauer, dass ein Längsträger 1 durch zwei Schalen 4 ausgebildet ist, die zusammen den Hohlquerschnitt 2 ausbilden. Insbesondere kann der Hohlquerschnitt 2 durch eine die Innenseite ausbildende und eine die Außenseite des Längsträgers ausbildende Schale 4 zusammengesetzt sein, wobei jede der beiden Schalen auch einen Teil der Ober- und der Unterseite des Längsträgers 1 ausbildet. Die zwei Schalen 4 sind im Bereich der Ober- und der Unterseite des Längsträgers 1 über Verschweißungen 14 dicht miteinander verschweißt, beispielsweise in einem Bereich in dem die beiden Schalen 4 miteinander überlappen. Im Längsträger 1 können Öffnungen ausgebildet sein, die beispielsweise über Metallstopfen 15 - zum Beispiel je nach Verwendung oder temporär - verschlossen werden können.

Fig. 3 zeigt zwei Schritte bei der Herstellung eines Längsträgers gemäß Fig. 1 und gemäß Fig. 2 in einer Schnittansicht.

Wie in der linken Abbildung der Fig. 3 gezeigt, kann eine Abschottung 5 zuerst dicht in eine der beiden Schalen 4, die den Hohlquerschnitt 2 bilden, eingeschweißt werden. Danach kann, wie in der rechten Abbildung der Fig. 3 gezeigt, die zweite Schale 4 dicht mit der Abschottung 5 und mit der ersten Schale 4 geschweißt werden.

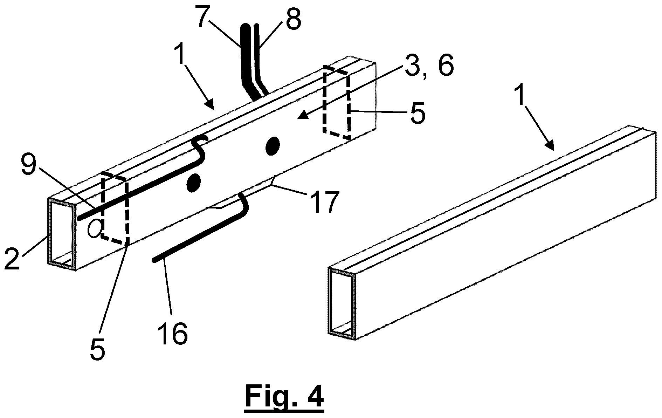

Fig. 4 ist eine dreidimensionale Darstellung der Längsträger eines Leiterrahmens eines erfindungsgemäßen Kraftfahrzeugs in einer zweiten Ausführungsform.

Der Hohlraum des Längsträgers 1 selbst, also der Aufnahmeraum 3, ist hier als Kraftstoffspeicher 6 zur Speicherung eines Kraftstoffs für den Antriebsmotor ausgebildet. Der Aufnahmeraum 3 für den Kraftstoff ist wieder durch zwei Abschottungen 5, wie zuvor beschrieben, vorne und hinten begrenzt.

Das Kraftfahrzeug umfasst einen Füllstutzen 7 zum Befüllen des Aufnahmeraums 3 und eine Betankungsentlüftungsleitung 8. Der Füllstutzen 7 und die Betankungsentlüftungsleitung 8 münden jeweils in den Aufnahmeraum 3 des Längsträgers 1 und sind am anderen Ende in den Außenraum des Kraftfahrzeugs geführt.

Das Kraftfahrzeug eine umfasst auch Tankentlüftungsleitung 9, wobei die Tankentlüftungsleitung 9 in den Aufnahmeraum 3 des Längsträgers 1 mündet und am anderen Ende zu einem Aktivkohlefilter geführt ist. Ferner ist eine Treibstoffleitung 16 aus dem Aufnahmeraum 3 des Längsträgers 1 geführt, um Kraftstoff zum Antriebsmotor zu führen.

Am Längsträger 1 ist im Abschnitt des Aufnahmeraums 3 eine Vertiefung 17 ausgebildet. Die Vertiefung 17 kann dazu dienen, dass die Treibstoffleitung 16 aus der Vertiefung 17 und somit aus einem möglichst tief liegenden Punkt aus dem Aufnahmeraum 3 abgezweigt ist.

Eine Kraftstoffpumpe und/oder Filter die zum Betrieb des Kraftstoffspeichers 6 benötigt werden, können beispielsweise extern, außerhalb des Längsträgers 1 und bevorzugt außerhalb des Leiterrahmens angeordnet sein.

Der zweite Längsträger 1, in Fig. 4 rechts dargestellt, kann beispielsweise auch als Kraftstoffspeichers 6 ausgebildet sein. Die beiden Aufnahmeräume 3 der beiden Längsträger können dann bevorzugt über eine oder mehrere Pendelleitungen fluidleitend miteinander verbunden sein, beispielsweise in der Art eines Satteltanks.

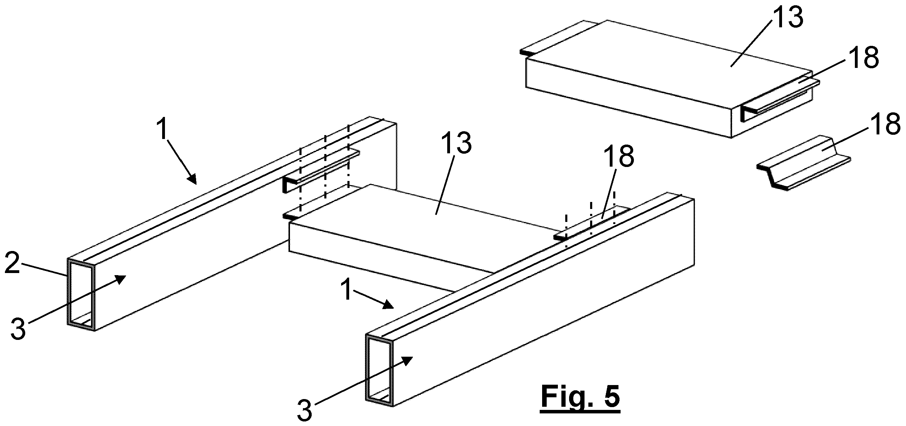

Fig. 5 zeigt schließlich eine Variante eines Leiterrahmens, bei dem ein oder mehrere Querträger 13 an beiden Längsträgern 1 befestigt sind, bevorzugt mit den Längsträgern 1 verschraubt sind.

Ein Querträger 13 kann über Gummilager entkoppelt an beiden Längsträgern 1 befestigt sein, bevorzugt verschraubt, beispielsweise bei Verwendung des Längsträgers zur Abgasführung 10, also als Abgasmodul.

Ein Querträger 13 kann bevorzugt von unten an den Längsträgern 1 montiert werden, beispielsweise über eine Verbindung von Konsolen 18 als Verbindungselemente. Dabei können auch zusätzliche Konsolen 18 als Zwischenelemente verwendet werden, zur Erhöhung der Steifigkeit. Eine Konsole 18 kann bevorzugt verschraubt sein am Längsträger 1 und/oder am Querträger 13.

Vorzugsweise kann ein Querträger 13 ebenfalls einen Hohlraum aufweisen. Der Hohlraum des Querträgers 13 kann zum Beispiel als Kraftstoffspeicher oder als Abgasführung oder als Batteriemodul oder als Schalldämpfermodul genutzt werden. Zwischen dem Hohlraum eines Querträgers und demjenigen eines Längsträgers können beispielsweise Leitungen, wie Verbindungsleitungen, eingerichtet sein (in Fig. 5 nicht dargestellt).

Ein Leiterrahmen kann somit erfindungsgemäß aus Hohlquerschnitten 2 bestehen oder solche umfassen, welche beispielsweise als Abgasleitung, bevorzugt inklusive Schalldämpfung, oder als Kraftstoffspeicher oder als Betriebsstoffspeicher, wie beispielsweise als Speicher für Harnstoff zur Abgasreinigung, verwendet werden können. Dabei können sowohl Längsträger 1 als auch Querträger 13 als Speicher- bzw. Transporträume genutzt werden. Besonders die Querträger 13 können auch als geschraubte Elemente ausgeführt werden, damit ein einfacher Austausch möglich ist. Außerdem kann die Verschraubung über Gummilager erfolgen, um eine Entkoppelung zum restlichen Rahmen zu ermöglichen, insbesondere zur Geräuschminderung bei Abgasschalldämpfern. Als weitere Anwendung kann die Querstruktur des Leiterrahmens, also Querträger 13, auch als Energiespeicher für Batterien Verwendung finden, speziell für Hybrid- oder Plug in-Hybridfahrzeuge.

In der Erfindung wird somit eine Speicher- und/oder Transportfunktion, wie die Abgasführung und/oder die Energiespeicherung, mit der tragenden Funktion eines Leiterrahmens zusammengeführt.

### Bezugszeichenliste

- 1: Längsträger
- 2: Hohlquerschnitt
- 3: Aufnahmeraum
- 4: Schale
- 5: Abschottung
- 6: Kraftstoffspeicher
- 7: Füllstutzen
- 8: Betankungsentlüftungsleitung
- 9: Tankentlüftungsleitung
- 10: Abgasführung
- 11: Abgaszuführungsleitung
- 12: Abgasabführleitung
- 13: Querträger
- 14: Verschweißung
- 15: Metallstopfen
- 16: Treibstoffleitung
- 17: Vertiefung
- 18: Konsole

## Patentansprüche

1. Kraftfahrzeug mit einem Leiterrahmen als Tragstruktur, wobei der Leiterrahmen zumindest einen Längsträger (1) umfasst, wobei der Längsträger (1) als Hohlquerschnitt (2) ausgebildet ist, wobei das Kraftfahrzeug einen Verbrennungsmotor als Antriebsmotor umfasst, **dadurch gekennzeichnet , dass** der durch den Hohlquerschnitt (2) ausgebildete Hohlraum des Längsträgers (1) selbst als Aufnahmeraum (3) für dem Antriebsmotor zuzuführende oder vom Antriebsmotor abzuführende Stoffe ausgebildet ist.

2. Kraftfahrzeug nach zumindest einem der vorhergehenden Ansprüche,
**dadurch gekennzeichnet , dass** der Längsträger (1) durch zwei Schalen (4) ausgebildet ist, die zusammen den Hohlquerschnitt (2) ausbilden, wobei die zwei Schalen (4) dicht miteinander verschweißt sind.

3. Kraftfahrzeug nach zumindest einem der vorhergehenden Ansprüche,
**dadurch gekennzeichnet , dass** zumindest eine Abschottung (5) als dicht in den Hohlquerschnitt (2) eingeschweißte Trennwand im Längsträger (1) eingerichtet ist, um den Aufnahmeraum (3) von einem weiteren Raum des Längsträgers (1) zu trennen.

4. Kraftfahrzeug nach Anspruch 3,
**dadurch gekennzeichnet , dass** zwei derartige Abschottungen (5) im Längsträger (1) angeordnet sind, so dass der Aufnahmeraum (3) für dem Antriebsmotor zuzuführende oder vom Antriebsmotor abzuführende Stoffe nach vorne und nach hinten in Längsrichtung des Kraftfahrzeugs abgeschlossen ist.

5. Kraftfahrzeug nach zumindest einem der vorhergehenden Ansprüche,
**dadurch gekennzeichnet , dass** der Hohlraum des Längsträgers (1) selbst als Kraftstoffspeicher (6) zur Speicherung eines Kraftstoffs für den Antriebsmotor ausgebildet ist.

6. Kraftfahrzeug nach Anspruch 5,
**dadurch gekennzeichnet , dass** das Kraftfahrzeug einen Füllstutzen (7) und/oder eine Betankungsentlüftungsleitung (8) umfasst, wobei der Füllstutzen (7) und/oder die Betankungsentlüftungsleitung (8) in den Aufnahmeraum (3) des Längsträgers (1) mündet und am anderen Ende in den Außenraum des Kraftfahrzeugs führt.

7. Kraftfahrzeug nach Anspruch 5 oder 6,
**dadurch gekennzeichnet , dass** das Kraftfahrzeug eine Tankentlüftungsleitung (9) umfasst, wobei die Tankentlüftungsleitung (9) in den Aufnahmeraum (3) des Längsträgers (1) mündet und am anderen Ende zu einem Aktivkohlefilter geführt ist.

8. Kraftfahrzeug nach zumindest einem der vorhergehenden Ansprüche,
**dadurch gekennzeichnet , dass** der durch den Hohlquerschnitt (2) ausgebildete Hohlraum des Längsträgers (1) selbst als Abgasführung (10) zur Abführung von Abgasen des Antriebsmotors ausgebildet ist.

9. Kraftfahrzeug nach Anspruch 8,
**dadurch gekennzeichnet , dass** eine Abgaszuführungsleitung (11) in den Aufnahmeraum (3) führt und eine Abgasabführleitung (12) aus dem Aufnahmeraum (3) führt, wobei bevorzugt die Abgaszuführungsleitung (11) und/oder die Abgasabführleitung (12) an der dem Inneren des Kraftfahrzeugs zugewandten Seite in den Längsträger (1) münden.

10. Kraftfahrzeug nach zumindest einem der vorhergehenden Ansprüche,
**dadurch gekennzeichnet , dass** der Leiterrahmen zwei derartige Längsträger (1) umfasst, so dass der durch den Hohlquerschnitt (2) ausgebildete Hohlraum des jeweiligen Längsträgers (1) selbst als für dem Antriebsmotor zuzuführende oder vom Antriebsmotor abzuführende Stoffe ausgebildet ist, wobei bevorzugt beide Längsträger (1) als Kraftstoffspeicher (6) oder beide Längsträger als Abgasführung (10) ausgebildet sind oder ein Längsträger (1) als Kraftstoffspeicher (6) und der andere Längsträger (1) als Abgasführung (10) ausgebildet ist.

11. Kraftfahrzeug nach Anspruch 10,
**dadurch gekennzeichnet , dass** zumindest ein Querträger (13) an beiden Längsträgern (1) befestigt ist, bevorzugt verschraubt ist.

12. Kraftfahrzeug nach Anspruch 11,
**dadurch gekennzeichnet , dass** der Querträger (13) über Gummilager entkoppelt an beiden Längsträgern (1) befestigt ist, bevorzugt verschraubt ist.

13. Kraftfahrzeug nach einem der Ansprüche 11 oder 12,
**dadurch gekennzeichnet , dass** der Querträger (13) einen Hohlraum aufweist, wobei der Hohlraum des Querträgers (13) als Kraftstoffspeicher oder als Abgasführung oder als Batteriemodul oder als Schalldämpfermodul ausgebildet ist.

## Geänderte Patentansprüche

### Geänderte Patentansprüche gemäss Regel 137(2) EPÜ.

1. Kraftfahrzeug mit einem Leiterrahmen als Tragstruktur, wobei der Leiterrahmen zumindest einen Längsträger (1) umfasst, wobei der Längsträger (1) als Hohlquerschnitt (2) ausgebildet ist, wobei das Kraftfahrzeug einen Verbrennungsmotor als Antriebsmotor umfasst, wobei der durch den Hohlquerschnitt (2) ausgebildete Hohlraum des Längsträgers (1) selbst als Aufnahmeraum (3) für dem Antriebsmotor zuzuführende oder vom Antriebsmotor abzuführende Stoffe ausgebildet ist, wobei der Leiterrahmen zwei derartige Längsträger (1) umfasst, so dass der durch den Hohlquerschnitt (2) ausgebildete Hohlraum des jeweiligen Längsträgers (1) selbst als für dem Antriebsmotor zuzuführende oder vom Antriebsmotor abzuführende Stoffe ausgebildet ist, wobei zumindest ein Querträger (13) an beiden Längsträgern (1) befestigt ist, **dadurch ge- kennzeichnet,** dass der Querträger (13) einen Hohlraum aufweist, wobei der Hohlraum des Querträgers (13) als Batteriemodul oder als Schalldämpfermodul ausgebildet ist.

2. Kraftfahrzeug nach zumindest einem der vorhergehenden Ansprüche,
**dadurch gekennzeichnet, dass** der Längsträger (1) durch zwei Schalen (4) ausgebildet ist, die zusammen den Hohlquerschnitt (2) ausbilden, wobei die zwei Schalen (4) dicht miteinander verschweißt sind.

3. Kraftfahrzeug nach zumindest einem der vorhergehenden Ansprüche,
**dadurch gekennzeichnet, dass** zumindest eine Abschottung (5) als dicht in den Hohlquerschnitt (2) eingeschweißte Trennwand im Längsträger (1) eingerichtet ist, um den Aufnahmeraum (3) von einem weiteren Raum des Längsträgers (1) zu trennen.

4. Kraftfahrzeug nach Anspruch 3,
**dadurch gekennzeichnet , dass** zwei derartige Abschottungen (5) im Längsträger (1) angeordnet sind, so dass der Aufnahmeraum (3) für dem Antriebsmotor zuzuführende oder vom Antriebsmotor abzuführende Stoffe nach vorne und nach hinten in Längsrichtung des Kraftfahrzeugs abgeschlossen ist.

5. Kraftfahrzeug nach zumindest einem der vorhergehenden Ansprüche,
**dadurch gekennzeichnet, dass** der Hohlraum des Längsträgers (1) selbst als Kraftstoffspeicher (6) zur Speicherung eines Kraftstoffs für den Antriebsmotor ausgebildet ist.

6. Kraftfahrzeug nach Anspruch 5,
**dadurch gekennzeichnet, dass** das Kraftfahrzeug einen Füllstutzen (7) und/oder eine Betankungsentlüftungsleitung (8) umfasst, wobei der Füllstutzen (7) und/oder die Betankungsentlüftungsleitung (8) in den Aufnahmeraum (3) des Längsträgers (1) mündet und am anderen Ende in den Außenraum des Kraftfahrzeugs führt.

7. Kraftfahrzeug nach Anspruch 5 oder 6,
**dadurch gekennzeichnet, dass** das Kraftfahrzeug eine Tankentlüftungsleitung (9) umfasst, wobei die Tankentlüftungsleitung (9) in den Aufnahmeraum (3) des Längsträgers (1) mündet und am anderen Ende zu einem Aktivkohlefilter geführt ist.

8. Kraftfahrzeug nach zumindest einem der vorhergehenden Ansprüche,
**dadurch gekennzeichnet, dass** der durch den Hohlquerschnitt (2) ausgebildete Hohlraum des Längsträgers (1) selbst als Abgasführung (10) zur Abführung von Abgasen des Antriebsmotors ausgebildet ist.

9. Kraftfahrzeug nach Anspruch 8,
**dadurch gekennzeichnet, dass** eine Abgaszuführungsleitung (11) in den Aufnahmeraum (3) führt und eine Abgasabführleitung (12) aus dem Aufnahmeraum (3) führt, wobei bevorzugt die Abgaszuführungsleitung (11) und/oder die Abgasabführleitung (12) an der dem Inneren des Kraftfahrzeugs zugewandten Seite in den Längsträger (1) münden.

10. Kraftfahrzeug nach zumindest einem der vorhergehenden Ansprüche,
**dadurch gekennzeichnet, dass** beide Längsträger (1) als Kraftstoffspeicher (6) oder beide Längsträger als Abgasführung (10) ausgebildet sind oder ein Längsträger (1) als Kraftstoffspeicher (6) und der andere Längsträger (1) als Abgasführung (10) ausgebildet ist.

11. Kraftfahrzeug nach Anspruch 10,
**dadurch gekennzeichnet, dass** zumindest ein Querträger (13) an beiden Längsträgern (1) verschraubt ist.

12. Kraftfahrzeug nach Anspruch 11,
**dadurch gekennzeichnet, dass** der Querträger (13) über Gummilager entkoppelt an beiden Längsträgern (1) befestigt ist, bevorzugt verschraubt ist.
